# EUROPÄISCHE PATENTANMELDUNG

(11) **EP 1 679 110 A1**
(43) Veröffentlichungstag der Anmeldung: **12.07.2006**
(21) Anmeldenummer: 05111656.4
(22) Anmeldetag: 02.12.2005
(51) Int. Cl.: B01D 46/52, B01D 25/24

(54) **Luftfilter**

(30) Priorität: 09.12.2004 DE 102004059279
(71) Anmelder: MANN+HUMMEL GmbH, 71638 Ludwigsburg (DE)
(72) Erfinder: Oelpke, Reinhard, 67376 Harthausen (DE); Hotop, Torsten, 75179 Pforzheim (DE)

(57) **Zusammenfassung**

Die Erfindung betrifft ein Filterelement für einen Fluidstrom zur stirnseitigen Anströmung, aufweisend
- mindestens eine flache Lage und mindestens eine gefaltete Lage, wobei die mindestens eine flache Lage mit der mindestens einen gefalteten Lage im Wechsel derart angeordnet ist, dass sich Kanäle mit offenem, insbesondere dreieckigem Querschnitt ergeben,
- dichte Verschlüsse jeweils der einen ersten Gruppe von Kanälen einerseits und dichte Verschlüsse der restlichen, nicht zu genannter Gruppe zählenden Kanäle einer zweiten Gruppe andererseits, derart, dass das zu filternde Fluid bei der Durchströmung des Filterelementes von einer Anströmseite, gebildet durch eine Stirnseite des Filterelementes, zu einer Abströmseite, gebildet durch dessen andere Stirnseite, eine der genannten Lagen, die zur Filterung des Fluides vorgesehen ist, durchtreten muss,
- Mittel zur Abdichtung der Anströmseite von der Abströmseite des Filterelementes in einem Gehäuseteil,
- wenigstens einen zentral im Filterelement angeordneten, von den Kanälen umgebenen Stützkörper, welcher sich axial im Wesentlichen bis zu wenigstens einer ersten Stirnseite des Filterelementes erstreckt,
- wobei sowohl die mindestens eine flache Lage als auch die mindestens eine gefaltete Lage aus durchströmbaren Filtermedien bestehen,
- wobei an jeder den offenen Querschnitt bildenden Seite derjenigen Kanäle der ersten Gruppe, die vom Rand des Filterelementes beabstandet sind, ein Kanal der zweiten Gruppe benachbart ist, so dass im Wesentlichen die vollständige Fläche der Kanäle der ersten Gruppe bis auf Faltkanten der Kanäle vom Fluid durchströmbar ist, wobei wenigstens eine der Stirnseiten Mittel zur Beabstandung der Stirnseite des Filterelementes gegenüber einer im Handhabungsfall genutzten Ablagefläche des Filterelementes aufweist, derart, dass ein direkter Oberflächenkontakt zwischen Stirnseite und Ablagefläche vermieden wird.

## Beschreibung

### Technisches Gebiet

Die Erfindung betrifft ein Luftfilterelement gemäß der Gattung des Patentanspruches 1.

### Stand der Technik

Filterelemente mit axialer Durchströmung werden in vielen Bereichen eingesetzt, in denen es gilt, ein Gas oder eine Flüssigkeit zu filtrieren. Diese Elemente werden hierzu in jeglicher Art von Gehäusen eingesetzt und müssen bestimmungsgemäß nach dem Erreichen einer bestimmten Ladung oder nach vorgegebenen Wartungsintervallen ersetzt oder gereinigt werden. Hierbei ist die Möglichkeit der Handhabung des Filterelementes von entscheidender Bedeutung, da ein schlecht handhabbares Filterelement möglicherweise erst gar nicht getauscht oder gereinigt wird oder bei dem Versuch der Handhabung über nicht vorgesehene Werkzeuge Schäden am Element oder System verursacht werden können. Die EP 1169109 B zeigt ein axial durchströmtes Filterelement mit einer stirnseitigen Anströmung und einer gegenüberliegenden stirnseitigen Abströmung ohne eine Umlenkung des Gasstromes, bei der ein sich axial von der ersten Stirnseite erstreckender Griff vorgesehen ist, welcher fest mit dem Filterelement - bevorzugt mit dem inneren Kern des Filterelementes - verbunden ist. Dieser Griff erstreckt sich derart weit von der Stirnseite des Filterelementes, dass eine problemlose Handhabung werkzeugfrei mit der Hand möglich ist. Während des Herstellungsprozesses und/oder im Wartungsfall werden derartige Filterelemente manchmal auf dem Boden oder einer Arbeitsfläche abgesetzt, wobei die reinseitige Stirnseite direkt auf der Ablagefläche zu liegen kommt. Besonders bei großvolumigen Filterelementen, welche ein gewisses Gewicht und/oder einen großen Außendurchmesser aufweisen, lässt sich ein zwischenzeitliches Abstellen nicht vermeiden. Hierbei können dann Fremdkörper aufgrund eines nicht sauberen Untergrundes in die empfindliche reinseitige Stirnseite des Filterelementes hineingedrückt werden. Dadurch werden einerseits die wechselseitig verschlossenen Kanalstrukturen des Filterelementes verletzt und andererseits können diese Fremdkörper, wie z.B. Metallspäne oder lose Schrauben und Muttern, in die Aggregate eingesaugt werden, welche eigentlich durch das Filterelement geschützt werden sollen. Hierdurch ergibt sich dann ein erhöhter Verschleiß oder sogar eine Schädigung der Aggregate, wie z.B. Brennkraftmaschinen oder Kompressoren, welches zu vermeiden ist.
Die Aufgabe der Erfindung ist es daher, die oben genannten Nachteile zu vermeiden und ein axial durchströmbares Filterelement zu schaffen, welches einfach und kostengünstig in der Herstellung ist und einen Schutz vor Verletzungen der Reinseite bietet. Diese Aufgabe wird durch die Merkmale des Patentanspruchs 1 gelöst.

### Offenbarung der Erfindung

Das erfindungsgemäße Filterelement für einen Fluidstrom zur stirnseitigen Anströmung weist ein axial durchströmtes Filtermedium, Mittel zur Abdichtung der Anströmseite von der Abströmseite des Filterelementes an der Außenseite des Filtermediums und wenigstens einen zentral im Filterelement angeordneten Stützkörper auf. Das Filtermedium weist hierbei abwechselnd angeordnete flache und gefaltete Filterlagen auf, wobei die flache Lage mit der gefalteten Lage im Wechsel derart angeordnet ist, dass sich Kanäle mit offenem, insbesondere dreieckigem Querschnitt ergeben. Die sich hieraus ergebenden Kanäle werden nun stirnseitig wechselseitig verschlossen, so dass das zu filternde Fluid bei der Durchströmung des Filterelementes von einer Anströmseite - gebildet durch eine Stirnseite des Filterelementes - zu einer Abströmseite - gebildet durch dessen andere Stirnseite - eine der genannten Lagen, die zur Filterung des Fluides vorgesehen sind, durchtreten muss. Der Stützkörper ist in dieser Ausgestaltung zentral in dem Filtermedium angeordnet und dadurch von den Kanälen umgeben, wobei er sich axial im Wesentlichen bis zu wenigstens einer ersten Stirnseite des Filterelementes erstreckt. Die Lagen des Filtermediums sind hierbei bevorzugt aus einem Filterpapier hergestellt, können jedoch auch beispielsweise aus einem vollsynthetischen Medium bestehen. Hier müsste die gefaltete Lage durch eine Imprägnierung des vollsynthetischen Mediums unterstützt werden. Das Filterelement kann dabei eine eckige, runde, elliptische oder ovale Querschnittsform aufweisen, bevorzugt ist es an den Außenkanten rund und zwischen den Außenkanten gerade in Form eines Ovals aufgebaut. Der Stützkörper, welcher zentral im Filterelement angeordnet ist, wird bevorzugt im Spritzgießverfahren hergestellt, kann jedoch auch aus einem anderen Material wie Kunststoff und in einem anderen Herstellverfahren hergestellt werden. Bevorzugt erstrecken sich beide Stirnseiten des Stützkörpers bis zu den entsprechenden Stirnseiten des Filtermediums. Durch den wechselseitigen Verschluss der zu durchströmenden Kanäle lässt sich erreichen, dass durch eine geschickte Anordnung jeweils die vollständige Fläche des umgebenden Filtermediums der ersten anströmseitigen Kanäle durchströmt werden kann, um in die zweiten abströmseitigen Kanäle zu gelangen. Eine Ausnahme bilden hierbei nur die zu äußerst liegenden Kanäle. Wenigstens eine der Stirnseiten des Filterelementes weist Mittel zur Beabstandung der Stirnseite gegenüber einer im Handhabungsfall genutzten Ablagefläche des Filterelementes auf. Durch diese Mittel zur Beabstandung wird ein direkter Oberflächenkontakt zwischen Stirnseite und Ablagefläche vermieden. Durch die Vermeidung des Oberflächenkontaktes kann das Filterelement im Handhabungsfall auch auf einer verschmutzten Ablagefläche abgestellt werden. Auf der Ablagefläche liegende Metallsplitter, Schrauben, Muttern oder sonstige Fremdkörper können so nicht in das stirnseitige Filtermedium des Filterelementes hineingedrückt werden, wodurch eine Beschädigung des Filterelementes vermieden wird. Bei der bevorzugten Anordnung der Mittel zur Beabstandung auf der Reinseite des Filterelementes wird weiterhin eine Abgabe der Fremdkörper an das zu schützende Aggregat verhindert. Dieses Aggregat kann beispielsweise ein Motor einer Brennkraftmaschine oder ein Kompressor sein. Durch eine geeignete Wahl eines Beabstandungsmittels lassen sich den Umständen entsprechende Abstände zwischen Stirnseite des Filterelementes und Ablagefläche erzielen. Die Mittel zur Beabstandung können hier lösbar oder unlösbar mit dem Filterelement verbunden sein, wobei ein unbeabsichtigtes Lösen des Beabstandungsmittels vermieden werden muss. Das erfindungsgemäße Filterelement erlaubt so eine schnelle und einfache Handhabung des Filterelementes, ohne dass eine besondere Vorsicht bzgl. des Untergrundes einer wie auch immer gearteten Ablagefläche berücksichtigt werden muss.

Gemäß einer vorteilhaften Ausgestaltung der Erfindung beinhaltet das Mittel zur Beabstandung wenigstens ein Profil, welches auf der Stirnseite des Filterelementes unlösbar mit dem Filtermedium verbunden ist. Durch dies Profil hält die Stirnseite des Filterelementes in abgelegtem Zustand einen vorgegebenen Abstand zur Ablagefläche ein. Weiterhin ergibt sich durch den Einsatz des Profils, dass die Stirnseite des Filterelementes in abgelegtem Zustand im Wesentlichen parallel zur Ablagefläche gehalten wird. Das Profil kann hierbei beispielsweise aus einer oder mehreren miteinander verbundenen oder losgelösten Abstandsleisten bestehen, wobei die Abstandsleisten aus Kunststoff, Metall oder einem anderen formstabilen Werkstoff bestehen können und bevorzugt unlösbar mit der Stirnseite des Filterelementes verbunden sind. Die Verbindung kann z.B. über eine Schweiß- oder Klebverbindung realisiert werden. Das verwendete Profil kann hierbei stabförmig mit einem runden, eckigen oder ovalen Querschnitt ausgebildet sein. Es kann kugel-, kegel- oder kegelstumpfförmig ausgebildet sein, es sind also alle möglichen Formen, welche einen Abstand des Filterelementes von der Auflagefläche garantieren, möglich. Auch eine Kombination der oben genannten Teile zu einem dreidimensionalen Profil, beispielsweise einem Profilstab mit zusätzlich ausgebildeten einzelnen Abstandselementen, soll ausdrücklich mit eingeschlossen sein. Durch die Verwendung derartiger Profile ist eine einfache, individuelle Anpassung an die Form und die Größe des Filterelementes möglich, so dass hier mit einfachen und kostengünstigen Mitteln der gewünschte Erfolg zu erzielen ist.

In vorteilhafter Weise ist hier an zwei gegenüberliegenden Seiten der Stirnseite jeweils ein Profil angeordnet, wobei die Profile jeweils durch Abstandsleisten, welche miteinander zu einer Struktur verbunden sind, gebildet werden. Bevorzugt folgt hierbei jeweils eine Abstandsleiste der Kontur der jeweiligen Seite der Stirnseite, wobei diese Abstandsleiste jeweils noch mit weiteren Abstandsleisten, die sich in Richtung des Stützkörpers erstrecken, verbunden ist. Durch diese im Wesentlichen symmetrische Anordnung der Profile ergibt sich eine gute Basis zum Aufstellen des Filterelementes, was eine besonders hohe Standsicherheit gewährleistet.

Eine Alternative besteht darin, das Mittel zur Beabstandung lösbar oder unlösbar mit dem Stützkörper zu verbinden. Dabei kann die Verbindung beispielsweise über eine Clips- oder Schraubverbindung bzw. eine Kleb- oder Schweißverbindung erfolgen. Durch die Verbindung mit dem Mittel zur Beabstandung ergibt sich wiederum in abgelegtem Zustand, dass die Stirnseite des Filterelementes im Wesentlichen parallel zur Ablagefläche unter Einhaltung eines vorgegebenen Abstandes zwischen Stirnseite und Ablagefläche eingehalten wird.

Bevorzugt weist das Mittel zur Beabstandung mehrere Abstandsleisten auf, wobei die Abstandsleisten mit dem Stützkörper verbunden sind und sich vom Stützkörper aus in verschiedene Richtungen parallel zur Stirnseite des Filterelementes erstrecken. Die Abstandsleisten können hierbei den oben beschriebenen Abstandsleisten gleich gestellt werden. Weiterhin ergibt sich durch eine bevorzugt gleichmäßige Erstreckung der Abstandsleisten vom Stützkörper aus gesehen ein fester und sicherer Stand des Filterelementes. Bei der Verwendung von beispielsweise drei oder vier Abstandsleisten wird auch ein äußerst geringer Druckverlust, hervorgerufen durch die Abstandsleisten, ermöglicht.

In einer alternativen Ausgestaltung ist das Mittel zur Beabstandung aus einem wenigstens teilweise die Stirnseite umlaufenden, knickstabilen Seitenband gebildet. Hierbei ist ein unterer Teil des Seitenbandes mit einem Teil der äußeren Mantelfläche des Filterelementes verbunden und ein oberer Teil in axialer Richtung über die Stirnseite des Filterelementes hinausragend ausgebildet. Die Höhe des Abstandes zwischen Filterelement und Ablagefläche ergibt sich also durch die Länge des oberen Teils, welche in axialer Richtung über die Stirnseite des Filterelementes hinausragt. Das Seitenband kann hierbei bevorzugt aus einem Kunststoff hergestellt sein, es sind jedoch auch Metall oder andere knickstabile Medien, welche in die Form eines flachen Streifens überführt werden können, möglich. Hierdurch ergibt sich einerseits der Vorteil des Schutzes der Stirnseite des Filterelementes durch die Beabstandung zu einer möglichen Ablagefläche und ein weiterer Vorteil, durch den Schutz des Endes der äußeren Mantelfläche des Filterelementes, welches bei Handhabung des Filterelementes einer erhöhten Angriffsgefahr durch Anstoßen ausgesetzt ist.

Gemäß einer vorteilhaften Ausgestaltung der Erfindung weist das Seitenband an seinem freien Ende des oberen Teils einen geringeren Durchmesser auf als am unteren Teil, welcher mit der Mantelfläche des Filterelementes verbunden ist. Dadurch ergibt sich bei der Handhabung der Vorteil, dass das derart ausgestaltete Filterelement einfacher in eine Öffnung eines dazugehörigen Gehäuses eingebracht werden kann, da durch die Durchmesseränderung eine Art Einfuhrschräge gebildet wird. Das Seitenband kann über beispielsweise eine Kleb- oder Schweißverbindung oder auch über lösbare Verbindungsarten mit der Mantelfläche des Filterelementes verbunden sein.

Gemäß einer alternativen Ausgestaltung der Erfindung ist das Mittel zur Beabstandung ein die gesamte Stirnseite bedeckendes, lösbar mit der Stirnseite verbundenes Abdeckmedium. Dieses Abdeckmedium kann z. B. eine Kunststofffolie sein, welche so stark und belastbar ist, dass auf einer Abdeckfläche liegende Fremdpartikel, wie beispielsweise Schrauben oder Metallspäne, diese nicht durchdringen können und so keinerlei Verletzungen an der Stirnseite des Filterelementes auftreten können. Weiterhin kann das Abdeckmedium aber auch aus Papier, Pappe, Metall oder sonstigen formstabilen Materialien sein, die die oben genannten Voraussetzungen erfüllen. Bevorzugt bildet das Abdeckmedium dabei einen umlaufenden Rand, welcher wenigstens teilweise über die Mantelfläche des Filterelementes gestülpt ist, um auch so einen Kantenschutz der Mantelfläche im Bereich der Stirnseite zu bilden.

Es ist vorteilhaft, wenn das Abdeckmedium korrespondierend mit einem Mittel zur Signalisierung des abgedeckten Zustandes des Filtermediums verbunden ist. Die Signalisierung kann hierbei visueller, haptischer oder hörbarer Art sein, derart, dass einer Person, welche das Filterelement handhabt, eindeutig signalisiert wird, dass das mit der Stirnseite verbundene Abdeckmedium noch mit dem Filterelement verbunden ist. Auf diese Art und Weise soll eine Fehlbedienung vermieden werden. Denkbar ist beispielsweise ein mit dem Abdeckmedium verbundenes signalfarbenes Band, welches ausgehend von dem Abdeckmedium auch die zweite Stirnseite umspannt oder ein vom Abdeckmedium ausgehende Folie mit einer rauen Oberfläche, derart, dass bei der Handhabung sofort die gewünschte Signalwirkung bei der handhabenden Person erzielt wird.

Hier ist es besonders vorteilhaft, wenn die Signalisierung auch in eingebautem Zustand des Filterelementes erkennbar ist. Hierzu müssen die Mittel zur Signalisierung über die an der Mantelfläche angebrachte Dichtung hinaus erkennbar sein, um nach dem Einbringen des Elementes in das Gehäuse immer noch eine Signalwirkung auszustrahlen.

Diese und weitere Merkmale von bevorzugten Weiterbildungen der Erfindung gehen außer aus den Ansprüchen auch aus der Beschreibung und der Zeichnung hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

### Kurze Beschreibung der Zeichnungen

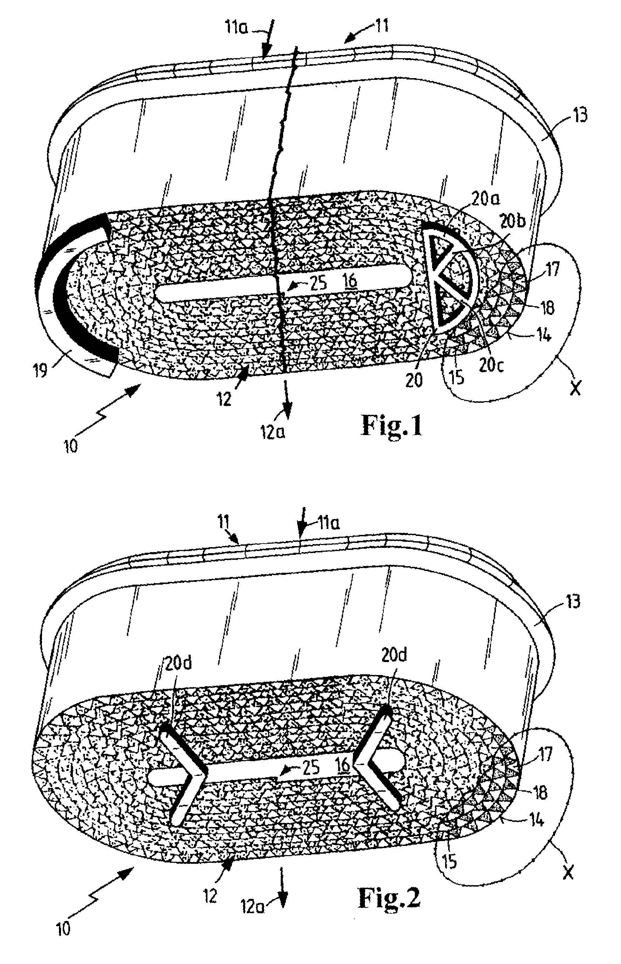

Weitere Einzelheiten der Erfindung werden in der Zeichnung anhand von schematischen Ausführungsbeispielen beschrieben. Hierbei zeigt Figur 1 eine schematische Ansicht des Filters in zweigeteilter Form und Figuren 2 bis 4 jeweils eine schematische Ansicht des Filters in alternativen Ausgestaltungen.

### Ausführungsform(en) der Erfindung

Die Figur 1 zeigt ein Filterelement 10 für den universellen Einsatz zur Filterung von gasförmigen Fluiden. Das Filterelement 10 kann beispielsweise bei Kompressoren aber auch genauso gut im mobilen Bereich verwendet werden, überall dort, wo die Filterung eines Luftstromes notwendig ist. Das Filterelement 10 wird dabei axial durchströmt, wobei die erste Stirnseite den Einlass 11 und die zweite Stirnseite den Auslass 12 darstellt. Zur Abdichtung zwischen einer Roh- und einer Reinseite weist das Filterelement 10 eine im Bereich der ersten Stirnseite des Filterelementes 10 angeordnete umlaufende Dichtung 13 auf, welche an Anlagedichtflächen innerhalb eines nicht dargestellten Gehäuses anliegt und somit für eine Abdichtung zwischen Roh- und Reinseite durch das Filterelement 10 sorgt. Das Filterelement 10 ist aus einem Wechsel aus flachen Filterlagen 14 und gefalteten Filterlagen 15, welche um einen Stützkörper 16, welcher zentral im Filterelement 10 angeordnet ist, gewickelt sind, hergestellt. Durch den Wechsel der flachen Lagen 14 und der gefalteten Lagen 15 ergibt sich nach der Wickelung um den Stützkörper 16 eine Kanalstruktur, welche durch den Einsatz eines Klebstoffes zu wechselseitig offenen Kanälen 17 und geschlossenen Kanälen 18 führt. So muss die zu filtrierende Luft beim Durchgang durch das Filterelement 10 erst in einen der offenen Kanäle 17 eintreten, durchtritt im Verlauf des Kanals entweder die flache Filterlage 14 oder gefaltete Filterlage 15, um dann aus dem benachbarten Kanal aus dem Filterelement 10 wieder herauszutreten. Das bedeutet, dass jeder Kanal, welcher an der ersten Stirnseite offen ist, an seiner zweiten Stirnseite geschlossen ist und die um diesen Kanal herum benachbarten Kanäle genau gegenteilig geöffnet und geschlossen sind. Im unteren Bereich des Stützkörpers 16 lässt sich eine Anschlagkante 25 erkennen, welche sich axial durch den gesamten Stützkörper 16 bis zur oberen Stirnseite durchzieht. Die erste Lage des aufzuwickelnden Filtermediums, bestehend aus einer flachen Lage 14 und einer gefalteten Lage 15, wird anstoßend an die Anschlagkante 25 des Stützkörpers 16 angelegt, dort über einen Leimauftrag verleimt und von dort ausgehend hier im Uhrzeigersinn um den Stützkörper aufgewickelt. In der Detaildarstellung "X" sind die in Figur 1 beschriebenen offenen Kanäle 17 und die geschlossenen Kanäle 18, sowie die flachen Filterlagen 14 und die gefalteten Filterlagen 15 nochmals besonders dargestellt. Das Filterelement 10 ist in der Figur zweigeteilt, wodurch zwei unterschiedliche Lösungen im Bereich der Mittel zur Beabstandung einer Stirnseite des Filterelementes 10 zu einer hier nicht dargestellten Ablagefläche. Auf der linken Seite ist an der zweiten Stirnseite eine Abstandsleiste 19 angebracht. Diese ist mit der Stirnseite über eine punktweise oder durchgehende Verklebung unlösbar verbunden. Bevorzugt ist die Abstandsleiste aus einem thermoplastischen Kunststoff im Spritzgießverfahren hergestellt. Es ist jedoch auch denkbar, hier andere Materialien zu verwenden. Die Kontur der Abstandsleiste 19 folgt im Wesentlichen einem Teil der Außenkontur der Stirnseite des Filterelementes 10, wobei jedoch die Abstandsleiste 19 an jedweder Position der Stirnseite angeordnet sein kann. Auf der rechten Seite ist das Mittel zur Beabstandung über eine Kombination aus Profilstäben 20, 20a, 20b, 20c gebildet, wobei diese Profilstäbe schmaler gebaut sind als die Abstandsleiste 19 auf der linken Seite, und die Standfestigkeit durch die Kombination der Profilstäbe 20, 20a, 20b, 20c hergestellt wird. Auch hier sind bevorzugt einzelne Punkte des Profilgerüstes 20, 20a, 20b, 20c mit einem Klebstoff versehen, wodurch dennoch eine ausreichend feste Verbindung mit der Stirnseite des Filterelementes 10 hergestellt wird. Bevorzugt werden die Lösungen der linken wie auch der rechten Seite der Figur 1 jeweils spiegelbildlich verwendet, um so für einen sicheren Stand und zu einer ausreichenden Beabstandung zur Ablagefläche zu sorgen.

Die Figur 2 zeigt eine alternative Ausgestaltung der Erfindung. Der Figur 1 entsprechende Bauteile sind mit den gleichen Bezugszeichen versehen. In der Alternative gemäß Figur 2 sind die Profilstäbe 20 jeweils zu einem Winkel angeordnet, und mit dem Stützkörper 16 verbunden. Die Verbindung kann hierbei lösbar über beispielsweise eine Clips- oder Schraubverbindung erfolgen oder unlösbar über eine Kleb- oder Schweißverbindung. Auch hier sind die Profilstäbe bevorzugt aus einem thermoplastischen, spritzgießfähigen Kunststoff im Spritzgießverfahren hergestellt, jedoch sind auch andere Materialien, wie Metall, Verbundwerkstoffe usw. möglich. Durch die paarweise und symmetrische Anordnung ist es auch hier möglich, einen sicheren Stand zu erzielen und eine im Wesentlichen parallele Beabstandung der Stirnseite des Filterelementes 10 zu einer nicht dargestellten Ablagefläche zu erzielen. Das Verbinden der Abstandsleiste 19 oder der Profilstäbe 20, 20a, 20b, 20c über eine Verklebung kann wie folgt erfolgen:
Im Rahmen der Fertigung muss der gewickelte Filterbalg auf eine Grundplatte einer Gießschale eingesetzt werden, um so ein Anschäumen der an der ersten Stirnseite angeordneten Dichtung, bevorzugt aus PUR-Schaum, zu ermöglichen. Nun könnten in die Grundplatte Nuten mit der Kontur der Profilstäbe oder der Abstandsleiste eingefräst werden, wobei dann die Profilstäbe oder die Abstandsleiste in die gefrästen Nuten eingelegt werden können, im nächsten Schritt mit Klebstoff versehen sowie darauffolgend mit dem Filterbalg oder dem Stützkörper 16 verbunden werden. Während nun die Dichtung angeschäumt wird und im Folgenden aushärtet, trocknet nun auch die Verklebung der Abstandsleisten bzw. Profilstäbe. Auf diese Art und Weise ergibt sich eine nur unwesentliche Verlängerung der Taktzeiten bei der Herstellung des vollständigen Filterelementes 10.

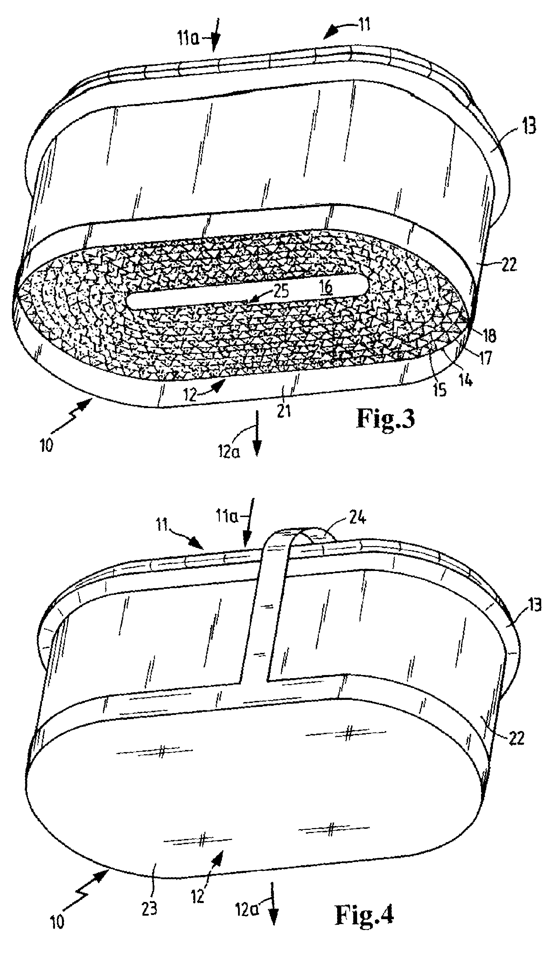

Die Figur 3 zeigt wiederum eine alternative Ausgestaltung der Beabstandungsmöglichkeit. Den vorherigen Figuren entsprechende Bauteile sind mit den gleichen Bezugszeichen versehen. Hier ist ein knickstabiles Seitenband 21 mit einer Mantelfläche 22 des Filterelementes 10 verbunden. Dadurch ergibt sich ein zweifacher Schutz des Filterelementes 10, zum einen wird die empfindliche Oberfläche der Stirnseite des Filterelementes 10 geschützt und zum anderen wird die Stirnkante der Stirnseite gegen Verletzungen durch Anschlagen geschützt. Das knickstabile Seitenband 21 ist hierbei bevorzugt aus einem Kunststoffband oder Metallband gefertigt, es sind jedoch auch andere knickstabile Materialien denkbar. Das Seitenband 21 wird bevorzugt unlösbar über eine Verklebung oder Verschweißung mit dem stirnseitigen Teil der Mantelfläche 22 verbunden. Ein Teil des knickstabilen Seitenbandes überragt dabei die Stirnseite des Filterelementes 10. Durch die Höhe dieses Teiles wird der Abstand zur Ablagefläche definiert. Der beste Schutz der Stirnkante ergibt sich, wenn die Mantelfläche 22 vollumfänglich mit dem knickstabilen Seitenband umgeben ist, aber es ist ebenso möglich, das knickstabile Seitenband nur partiell an der Mantelfläche 22 anzubringen.

Die Figur 4 zeigt eine zusätzliche Alternative der Erfindung. Den vorherigen Figuren entsprechende Bauteile sind mit den gleichen Bezugszeichen versehen. In diesem Fall wird die gesamte Stirnseite mit einer Abdeckung 23, welche sich über die gesamte Stirnseite und einen Teil der Mantelfläche 22 erstreckt, überdeckt. Die Abdeckung 23 ist hierbei bevorzugt aus einem Kunststoff oder Metall gefertigt, wobei die Stärke und das Material so gewählt werden sollten, dass sich auf einer Ablagefläche befindliche Fremdkörper nicht oder durch das Material hinein- oder hindurchdrücken lassen. Vor der Benutzung des Filterelementes 10 muss die Abdeckung 23 dann entfernt werden. Zur Visualisierung, dass die Abdeckung 23 noch am Filterelement 10 vorhanden ist, ist eine Lasche 24 mit dieser verbunden. Die Lasche 24 erstreckt sich von dem Teil der Abdeckung 23, der die Mantelfläche 22 umgibt, bis wenigstens zur gegenüberliegenden Stirnseite des Filterelementes 10, oder es ist möglich, die Lasche bis zur anderen Seite der Abdeckung 23 zu führen. So ist beim Einsetzen des Filterelementes 10 aus jeder Blickrichtung eine Anzeige, dass die Abdeckung 23 noch mit dem Filterelement 10 verbunden ist, erkennbar. Bevorzugt ist die Lasche 24 hierbei in einer Signalfarbe gehalten, so dass auch bei ungünstigen Sichtverhältnissen das Abnehmen der Abdeckung 23 vor dem Gebrauch des Filterelementes 10 nicht vergessen werden kann. Die Lasche 24 kann dabei bevorzugt aus einem einfach zerreißbaren Folienmaterial bestehen.

## Patentansprüche

1. Filterelement für einen Fluidstrom zur stirnseitigen Anströmung, aufweisend
- mindestens eine flache Lage und mindestens eine gefaltete Lage, wobei die mindestens eine flache Lage mit der mindestens einen gefalteten Lage im Wechsel derart angeordnet ist, dass sich Kanäle mit offenem, insbesondere dreieckigem Querschnitt ergeben,
- dichte Verschlüsse jeweils der einen ersten Gruppe von Kanälen einerseits und dichte Verschlüsse der restlichen, nicht zu genannter Gruppe zählenden Kanäle einer zweiten Gruppe andererseits, derart, dass das zu filternde Fluid bei der Durchströmung des Filterelementes von einer Anströmseite, gebildet durch eine Stirnseite des Filterelementes, zu einer Abströmseite, gebildet durch dessen andere Stirnseite, eine der genannten Lagen, die zur Filterung des Fluides vorgesehen ist, durchtreten muss,
- Mittel zur Abdichtung der Anströmseite von der Abströmseite des Filterelementes in einem Gehäuseteil,
- wenigstens einen zentral im Filterelement angeordneten, von den Kanälen umgebenen Stützkörper, welcher sich axial im Wesentlichen bis zu wenigstens einer ersten Stirnseite des Filterelementes erstreckt,
- wobei sowohl die mindestens eine flache Lage als auch die mindestens eine gefaltete Lage aus durchströmbaren Filtermedien bestehen,
- wobei an jeder den offenen Querschnitt bildenden Seite derjenigen Kanäle der ersten Gruppe, die vom Rand des Filterelementes beabstandet sind, ein Kanal der zweiten Gruppe benachbart ist, so dass im Wesentlichen die vollständige Fläche der Kanäle der ersten Gruppe bis auf Faltkanten der Kanäle vom Fluid durchströmbar ist, **dadurch, gekennzeichnet, dass** wenigstens eine der Stirnseiten Mittel zur Beabstandung der Stirnseite des Filterelementes gegenüber einer im Handhabungsfall genutzten Ablagefläche des Filterelementes aufweist, derart, dass ein direkter Oberflächenkontakt zwischen Stirnseite und Ablagefläche vermieden wird.

2. Filterelement gemäß Anspruch 1, **dadurch gekennzeichnet, dass** das Mittel zur Beabstandung wenigstens ein Profil beinhaltet, welches auf der Stirnseite des Filterelementes unlösbar mit dem Filtermedium verbunden ist, derart, dass das Profil die Stirnseite des Filterelementes im abgelegten Zustand im Wesentlichen parallel zur Ablagefläche unter Einhaltung eines vorgegebenen Abstandes zwischen Stirnseite und Ablagefläche hält.

3. Filterelement gemäß Anspruch 2, **dadurch gekennzeichnet, dass** an zwei gegenüberliegenden Seiten der Stirnseite zwei Profile angeordnet sind, wobei die Profile jeweils durch Abstandsleisten, welche miteinander zu einer Struktur verbunden sind, gebildet werden.

4. Filterelement gemäß Anspruch 1, **dadurch gekennzeichnet, dass** das Mittel zur Beabstandung lösbar oder unlösbar mit dem Stützkörper verbunden ist, derart, dass das Mittel die Stirnseite des Filterelementes im abgelegten Zustand im Wesentlichen parallel zur Ablagefläche unter Einhaltung eines vorgegebenen Abstandes zwischen Stirnseite und Ablagefläche hält.

5. Filterelement gemäß Anspruch 4, **dadurch gekennzeichnet, dass** das Mittel zur Beabstandung mehrere Abstandsleisten beinhaltet, wobei die Abstandsleisten mit dem Stützkörper verbunden sind und sich vom Stützkörper in verschiedene Richtungen parallel zur Stirnseite des Filterelementes erstrecken.

6. Filterelement gemäß Anspruch 1, **dadurch gekennzeichnet, dass** das Mittel zur Beabstandung aus einem wenigstens teilweise die Stirnseite umlaufenden, knickstabilen Seitenband gebildet ist, wobei ein unterer Teil des Seitenbandes mit einem Teil der äußeren Mantelfläche des Filterelementes verbunden ist und ein oberer Teil in axialer Richtung über die Stirnseite des Filterelementes hinausragt.

7. Filterelement gemäß Anspruch 6, **dadurch gekennzeichnet, dass** das Seitenband an seinem freien Ende des oberen Teils einen geringeren Durchmesser aufweist, als am unteren Teil, welcher mit der Mantelfläche des Filterelementes verbunden ist.

8. Filterelement gemäß Anspruch 1, **dadurch gekennzeichnet, dass** das Mittel zur Beabstandung ein die gesamte Stirnseite bedeckendes, lösbar mit der Stirnseite verbundenes Abdeckmedium ist.

9. Filterelement gemäß Anspruch 8, **dadurch gekennzeichnet, dass** das Abdeckmedium korrespondierend mit einem Mittel zur Signalisierung des abgedeckten Zustandes des Filtermediums verbunden ist.

10. Filterelement nach Anspruch 9, **dadurch gekennzeichnet, dass** die Signalisierung im eingebauten Zustand des Filterelementes erkennbar ist.
